Europäisches Patentamt

European Patent Office

Office européen des brevets

(11) Veröffentlichungsnummer: **0 274 005 B1**

(12) **EUROPÄISCHE PATENTSCHRIFT**

(45) Veröffentlichungstag der Patentschrift: **02.12.92**

(21) Anmeldenummer: **87113577.8**

(22) Anmeldetag: **17.09.87**

(51) Int. Cl.⁵: **B29C 45/27**

(54) **Verteiler für Spritzguss-Heisskanalsysteme.**

(30) Priorität: **06.12.86 DE 3641711**

(43) Veröffentlichungstag der Anmeldung:
**13.07.88 Patentblatt 88/28**

(45) Bekanntmachung des Hinweises auf die
Patenterteilung:
**02.12.92 Patentblatt 92/49**

(84) Benannte Vertragsstaaten:
**AT BE CH DE ES FR GB GR IT LI LU NL SE**

(56) Entgegenhaltungen:
**DE-A- 3 423 254**
**GB-A- 2 059 862**
**US-A- 3 091 812**
**US-A- 3 520 026**
**US-A- 3 677 682**

(73) Patentinhaber: **Dipl.-Ing. Herbert Günther Gesellschaft mbH**
**Speichmühlgasse 1**
**A-2380 Perchtoldsdorf(AT)**

(72) Erfinder: **Günther, Herbert, Dipl.-Ing.**
**Sachsenberger Strasse 3**
**W-3558 Frankenberg/Eder(DE)**

(74) Vertreter: **Olbricht, Karl Heinrich, Dipl.-Phys.**
**Am Weinberg 15**
**W-3556 Niederweimar(DE)**

**Beschreibung**

Die Erfindung betrifft einen Verteiler gemäß dem Oberbegriff von Anspruch 1.

Derartige Verteiler sind herkömmlich als Blöcke ausgebildet, die in der Regel über außen anliegende Heizpatronen oder Rohrheizkörper beheizt werden. Spezielle Bauelemente sind dabei erforderlich, um eine thermische Trennung vom übrigen Spritzguß-Werkzeug zu bewirken; dennoch sind jedoch Undichtigkeiten und ungewollte Beeinflussungen der Werkzeugtemperatur keineswegs ausgeschlossen. Nachteilig ist auch, daß zum Erwärmen des Blockes stets eine verhältnismäßig große Aufheizenergie benötigt wird; entsprechend lang sind die Anheizzeiten. Ferner bereitet die Reinigung jedenfalls von außen her gewisse Probleme, insbesondere bei außenbeheizten Systemen.

In der US-PS 3 091 812 ist zwar bereits ein Verteiler vorgeschalgen worden, der gegenüber dem umgebenden Block isoliert ist. Ein entweder außenbeheiztes oder selbstheizendes, materialführendes Rohr ist in einer Isoliermasse permanent eingebettet, die ihrerseits von einem in dem Block anliegenden leitenden Rohr umschlossen ist. Letzteres ist jedoch an seinen Enden jeweils mit einer Stahlplatte verschweißt, die gegenüber dem Materialrohr nicht isoliert ist, so daß hier eine massive Wärmeabfuhr stattfindet. Dadurch treten erhebliche Energieverluste auf, und an den Materialübertritten ist grundsätzlich keine erhöhte Leistung erzielbar. Dementsprechend kommt es zu einem unkontrollierten Einfluß auf die Werkzeugtemperatur. Das Heißkanalsystem gemäß dieser Druckschrift ist als fester Bestandteil in die miteinander verschraubten Platten der Form eingebaut und kann lediglich durch Zerlegung unter Abnahme der Materialauslässe bzw. Düsenspitzen sowie der Anschlußteile entnommen werden. Die Anordnung läßt sich nicht oder höchstens werksseitig und dann mit großem mechanisch-chemischem Aufwand reinigen; im Wartungsfalle muß sie der Anwender durch eine gleichartige Vorrichtung ersetzen. Ähnliches gilt für ein Heißkanalsystem nach der US-A-3 520 026, wobei ebenfalls der gesamte Verteilerblock entweder über Wärmebrücken oder als selbstheizende Vorrichtung aufgeheizt wird und namentlich am Materialübertritt ein steiler Temperaturabfall unvermeidlich ist. Die infolge des hohen Bearbeitungsdruckes auftretenden großen Kräfte müssen auch hier um den Block herumgeführt werden, was den konstruktiven Aufwand entsprechend steigert.

Mithin besteht ein Bedürfnis nach einer möglichst wirtschaftlichen Weiterentwicklung. Es ist ein wichtiges Ziel der Erfindung, an einem Verteiler der genannten Art die mechanischen und thermischen Eigenschaften noch zu verbessern und speziell den Wärmeübergang an das Gehäuse zu minimieren.

Außerdem sollen Montage, Wartung und Reinigung des Systems erleichtert sowie der energetische und zeitliche Aufwand herabgesetzt werden.

Hauptmerkmale der Erfindung sind im kennzeichnenden Teil von Anspruch 1 angegeben. Weiterbildungen sind Gegenstand der Ansprüche 2 bis 18.

Der neuartige außenbeheizte Verteiler gemäß Anspruch 1 sieht vor, daß das Materialrohr zusammen mit der Heizeinrichtung und einer diese umschließenden Hülse eine selbständige, gegenüber dem Gehäuse thermisch getrennte Baueinheit bildet, die stirnseitig in das Gehäuse einführbar und darin bzw. daran fixierbar ist. Der Verteiler vereinigt die Vorzüge innenbeheizter Systeme mit besonders hoher Wartungsfreundlichkeit. Das neue System ist aus einfachen Standardkomponenten modular aufgebaut, die sich bequem zusammensetzen und auch getrennt warten lassen. Ferner ist es möglich, einzelne Bauelemente elektrisch kombiniert oder auch nur für sich zu regeln. Die Baueinheit von Materialrohr, Heizeinrichtung und Hülse läßt sich sehr rasch und genau montieren oder demontieren, so daß im praktischen Betrieb kurze Stillstandszeiten erzielt werden, wenn irgendwelche Wartungsarbeiten ausgeführt werden müssen. Dadurch ist nicht nur die Handhabung beim Anwender stark erleichtert, sondern auch der Ausgleich von Wärmedehnungen zwischen heißen und kalten Elementen dank der einseitigen Fixierung auf einfache Weise gewährleistet. Der allgemein zylindrische Aufbau ermöglicht auf besonders einfache und zuverlässige Weise die thermische Trennung gegenüber dem vergleichsweise kalten Verteilergehäuse durch einen in dessen Bohrung rundum vorhandenen freien Raum. Dieser kann (muß aber nicht) mit Kunststoff gefüllt sein, so daß die Materialübergänge in die Heißkanaldüsen ebenfalls thermisch vom Gehäuse bzw. seiner Bohrungswandung getrennt sind. Die Wärmedehnung (thermische Quellung) des innenliegenden heißen Rohres zu den äußeren kalten Bauelementen ist an jedem Materialübergang definiert. Dies gestattet es, die Beheizung mit genau bemessenen Wärmeübergängen durchzuführen, wodurch man jeweils ein konstantes Temperaturprofil erreicht. Die Bauart des Verteilers gewährleistet, daß der Temperaturhaushalt des Werkzeugs nur minimal beeinflußt wird, ganz im Gegensatz zu konventionellen Heißkanalsystemen. Die durchgehende Isolierung gegenüber dem Gehäuse bewirkt erhebliche Energie-Einsparungen, weil wärmeleitende Verbindungen bzw. Brücken grundsätzlich vermieden sind. Außerdem sind die Aufheizzeiten durch verringerte Aufheizleistung und die insgesamt kleine Wärmeabfuhr-Oberfläche sowie dadurch wesentlich verkürzt, daß die aufheizbare Stahlmasse viel kleiner ist als bei herkömmlichen Heißkanalsystemen, bei denen die gesamten Blök-

ke auf die notwendige höhere Temperatur gebracht werden müssen.

Durch die konzentrische Anordnung von Heizeinrichtung und Hülse mit Stützringen gemäß Anspruch 2 ist eine mechanisch sehr stabile und thermisch überaus vorteilhafte Verteiler-Konstruktion gegeben, die ohne besonderen Aufwand elektrisch gut isoliert ist. Die Abstützung erfolgt mit sehr kleiner wärmeübertragender Fläche, die außerdem zum Gehäuse hin isoliert ist. So wird der Wärmedurchgang nach außen weitestgehend gehemmt.

Die konstruktive Ausgestaltung laut Anspruch 3 sieht vor, daß praktisch die ganze Heizeinrichtung - bis auf Aussparungen an den Materialübertritten - von der Hülse oder von Hülsenteilen anliegend umschlossen ist. Diese Anordnung besitzt hohe Festigkeit, die allen Druck- und Wärmebeanspruchungen gewachsen ist.

Zur Erhöhung der elektrischen Sicherheit trägt es bei, wenn die Anschlüsse dabei nach Anspruch 4 an ein Ende der Baueinheit verlegt und zusätzlich isoliert sind. Durch Formschluß gemäß Anspruch 5 wird in konstruktiv sehr einfacher Weise die notwendige Dichtigkeit auch bei hohen Materialdrücken sichergestellt, und zwar gerade im Bereich der elektrischen Anschlüsse. Dennoch ist die für den Wartungsfall erforderliche Lösbarkeit der Bauteile ohne weiteres gesichert.

Ein sehr wichtiges Merkmal der Erfindung besteht gemäß Anspruch 6 darin, daß die Heizeinrichtung im Bereich der Materialübertritte Abschnitte konzentrierter Heizleistung aufweist, an die zwischen den Materialübertritten Abschnitte verringerter Heizleistung anschließen. Gerade dort, wo das zu verarbeitende Material fließend ein- und austreten muß, wird also verstärkt Heizenergie zugeführt, wogegen man in den meist geradlinigen Bereichen dazwischen mit geringerer Leistung auskommt. Diese Maßnahme führt zu weiterer, sehr beträchtlicher Energie-Einsparung.

In der praktischen Ausführung kann die Heizeinrichtung laut Anspruch 7 eine zum Anschluß an normale Netzspannung geeignete Wicklung oder Wendel mit ungleichförmiger Windungsdichte sein. Alternativ sieht die Erfindung gemäß Anspruch 8 vor, daß die Heizeinrichtung ein speziell gestaltetes Widerstandsband ist, das vorzugsweise mit Niederspannung gespeist wird. Durch abwechselnd breitflächige und ausgesparte Bandabschnitte kann auch hierbei die Heizleistung über die Länge ungleichförmig verteilt und vor allem im Bereich der Materialübertritte konzentriert werden. Außerordentlich vorteilhaft ist hierbei die Gestaltung nach Anspruch 9, wobei ein flaches Widerstandsband - zur Ebene abgewickelt - allgemein Mäanderform hat und jeder zweite Längssteg einen breitflächigen Abschnitt aufweist, der über den ganzen Umfang des Materialrohres reicht. Von dem Verbindungsschenkel zum benachbarten Längssteg können die breitflächigen Abschnitte laut Anspruch 10 jeweils durch einen schräg oder quer zur Rohr-Längsrichtung verlaufenden Stichspalt getrennt sein.

Eine besonders hohe Festigkeit erzielt man, wenn laut Anspruch 11 innerhalb der Hülse, insbesondere in ausgesparten Abschnitten der Heizeinrichtung, Füllstücke vorhanden sind, welche die mechanische Abstützung übernehmen, aber keinen Bestandteil des Stromkreises bilden. Dadurch ist für hohe Festigkeit auch im Bereich der Aussparungen gesorgt, da der Materialdruck sich gleichmäßig vom inneren auf das äußere Rohr überträgt.

Eine weitere wichtige Maßnahme gemäß Anspruch 12 sieht vor, daß die Baueinheit einen Zwei- oder Mehrschalenaufbau mit innenliegender Heizeinrichtung besitzt und daß zumindest zwischen den Materialübertritten zum Gehäuse hin eine zweistufige Isolierung vorhanden ist. Diese ergibt mit besonders kleinem Bauaufwand ausgezeichnete mechanisch-thermische Eigenschaften, vor allem hohe Druckfestigkeit und Wärmedämmung. In der praktischen Gestaltung sind an den Stützringen laut Anspruch 13 Isolierräume vorhanden, letztere namentlich zwischen den Materialübertritten. Im Betrieb werden diese Hohlräume mit hindurchströmendem Material gefüllt, d.h. mit Kunststoff, dessen Isoliereigenschaften eine zusätzliche Wärmedämmung nach außen bewirken, so daß man mit äußerst geringer Heizenergie auskommt. Weil das Material an den Fügeflächen erstarrt, wird ferner eine Abdichtung erzielt, also die Gefahr von Undichtigkeiten vermieden. Gleichzeitig bleibt die Dehnungsmöglichkeit zwischen heißen (inneren) und kalten (äußeren) Elementen voll aufrechterhalten.

Gemäß Anspruch 14 ist zumindest an einem Ende des Materialrohrs ein herausziehbarer Stopfen vorgesehen, der zumindest an seinem inneren Ende schwach konisch gestaltet und laut Anspruch 15 durch eine Sicherung gehalten sein kann. Damit kann das innenliegende Materialrohr im Montage-Zustand gereinigt werden, d.h. ohne daß es aus der Verteilerplatte ausgebaut werden müßte. Zum Reinigen genügt es, eine Verschlußschraube zu lösen und den Stopfen zu ziehen, der sich zweckmäßig an der Anschlußseite befindet. Ihr gegenüber kann laut Anspruch 16 ein gegebenenfalls entnehmbarer Verschluß vorhanden sein, um die Wartungsmöglichkeiten noch zu verbessern oder auch gemäß Anspruch 17 dort und/oder in einen Materialaustritt eine weitere Baueinheit einsetzen zu können, z.B. mit stirnseitigem Materialeintritt unter einem Winkel zu dem ersten Materialrohr. Dabei ist die Abdichtung durch den im Betrieb mit Kunststoff gefüllten Freiraum gewährleistet.

Die Ausführungsform nach Anspruch 18 erlaubt einen flächigen Formschluß des gegebenenfalls plattenförmigen Verteilergehäuses an den zugeordneten Werkzeugplatten. Dadurch ist eine Kraftübertragung vom Formnest auf die Maschinenplatten möglich, ohne daß Wärmeverluste zu befürchten wären, weil ja dank der thermischen Trennung schon im Anschlußteil und dank der großen Wärmedämmung des erfindungsgemäßen Verteilers insgesamt bereits das Gehäuse Werkzeug-Temperatur haben kann.

Weitere Merkmale, Einzelheiten und Vorteile der Erfingung ergeben sich aus dem Wortlaut der Ansprüche sowie aus der folgenden Beschreibung von Ausführungsbeispielen anhand der Zeichnung. Darin zeigen:

Fig. 1    eine Axialschnittanslicht eines Verteilers,

Fig. 2    eine Draufsicht auf ein abgewickeles Heizband,

Fig. 3    eine Schnittansicht entsprechend der Linie III-III in Fig. 1 und

Fig. 4    eine schematisierte Teil-Axialschnittansicht einer Winkeleinheit.

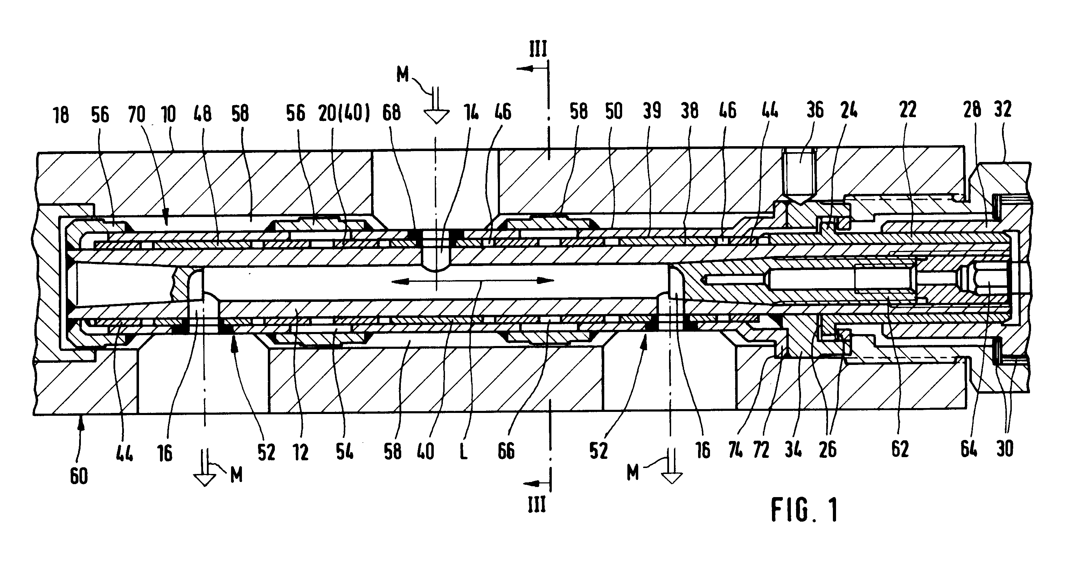

Der in Fig. 1 dargestellte Verteiler hat ein blockförmiges Gehäuse 10, in dessen Innerem ein Materialrohr 12 angeordnet ist. Dazu radial sind Materialübertritte vorhanden, nämlich eine Eintrittsöffnung 14 und mindestens eine Austrittsöffnung 16. Stirnseitig (links) ist ein Verschluß 18 vorhanden, der mit dem Rohr 12 fest verbunden, z.B. verschweißt sein kann. Am anderen Ende befindet sich ein lösbarer Stopfen 62.

Auf dem Materialrohr 12 ist eine Heizeinrichtung 20 in Form eines rohrförmig-konzentrischen Widerstandsbandes vorgesehen; dazwischen ist eine dünne Isolierschicht 38 angebracht. Eine mit dem Widerstandsband 20 verbundene Anschlußbuchse 22 ist von einem Thermofühler-Körper 28 umschlossen, der unter Zwischenlage von Isolierstücken 30 in einer Schraubbuchse 32 abgestützt ist.

Unter Zwischenlage einer weiteren dünnen Isolierschicht 39 ist die Heizeinrichtung 20 von einer Hülse umschlossen, die mit einem Bund 72 an einer Schluter 74 des Gehäuses 10 anliegt. Für die Befestigung sorgt ein Flansch 34, der durch die Schraubbuchse 32 axial eingespannt und durch einen Gewindestift 36 lagegesichert ist. Gegenüber dem Flansch 34 ist ein Bund 24 der Anschlußbuchse 22 durch Isolierringe 26 elektrisch getrennt.

Die Hülse 50 hat an den Materialübertritten 14, 16 Rohraussparungen 52. In Längsrichtung L hat die Hülse 50 außerhalb der Materialübertritte 14, 16 Ausnehmungen in Form von Luftspalten 54. In diesen Bereichen wird die Hülse 50 von Stützringen 56 solcher Bemessung umschlossen, daß einerseits Isolierräume 58 zum Gehäuse 10 hin und andererseits eine sichere Überdeckung der Luftspalte 54 zur Heizeinrichtung 20 hin gewährleistet sind. Im Betrieb sind die Freiräume 58 zwischen der Hülse 50 und dem Gehäuse 10 von dem zu verarbeitenden Kunststoff umgeben, der an den Fügeflächen erstarrt und mit seinen eigenen Isoliereigenschaften erheblich zur Wärmedämmung beiträgt. Nach innen sorgen die Luftspalte 54 für vermehrte Wärmeisolierung.

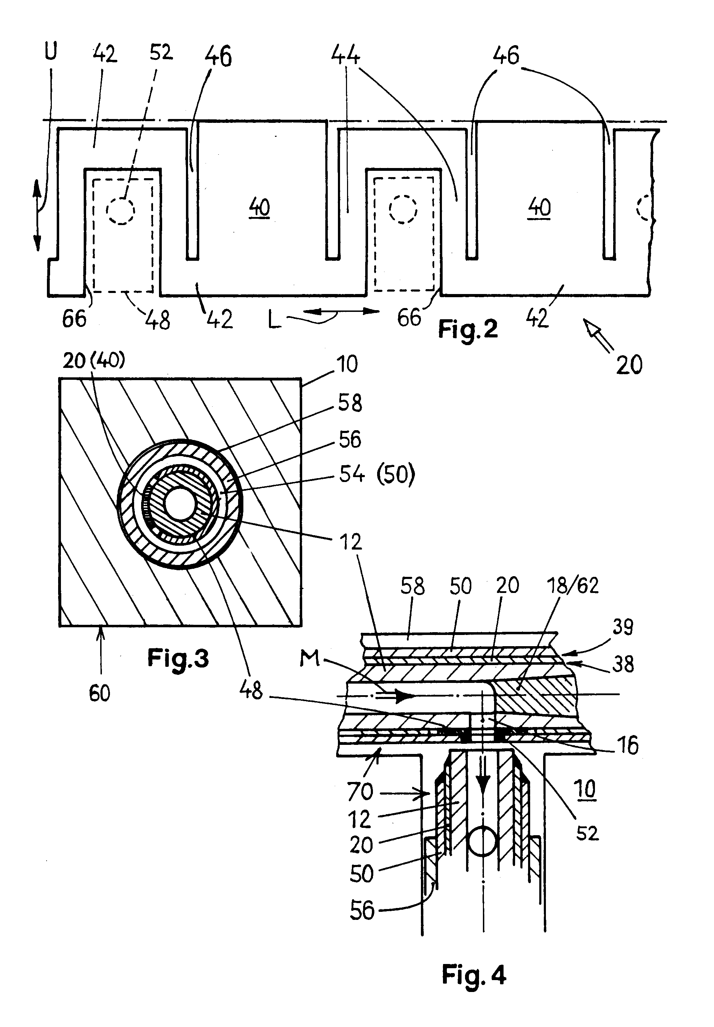

In abgewickelter Form ist das Heizrohr 20 in Fig. 2 schematisch dargestellt. Bei diesem Ausführungsbeispiel wechseln in Längsrichtung L breite Ringabschnitte 40 mit U-förmigen Aussparungen 66 ab, die von Längsstegen 42 und Verbindungsschenkeln 42 gebildet sind. Zwischen diesen abwechselnden Abschnitten sind Stichspalte 46 vorhanden, die in Umfangsrichtung U oder auch schräg verlaufen können. Vorzugsweise sind in den U-förmigen Aussparungen 66 mit geringem Abstand Füllstücke 48 angeordnet, wie gestrichelt gezeichnet. Sie umschließen die Rohraussparungen 52 und sind daran mittels Befestigungen 68 fixiert, z.B. durch Verschweißung.

Der radiale Aufbau dieser konzentrischen Wärmedämmungs-Anordnung ist im Querschnitt der Fig. 3 veranschaulicht. Daraus erkennt man, daß durch die zweistufige Wärmeisolierung nach innen und außen auch in den Bereichen der Stützringe 56 für extrem niedrige Wärmeabfuhr von der Heizeinrichtung 20 zum Gehäuse 10 gesorgt ist.

Das Materialrohr 12 bildet zusammen mit der Heizeinrichtung 20 und der Hülse 50 samt Stützringen 56 eine Baueinheit 70, die stirnseitig in das Gehäuse 10 einführbar und darin mittels Bund 72, Flansch 34 und Schraubbuchse 32 befestigbar ist. Letztere ist durch Isolierstücke 30 von dem Thermofühler-Körper 28 und der Anschlußbuchse 22 elektrisch getrennt. Der Flansch 34 hat zumindest eine axiale Durchgnagsöffnung für die Stromzufuhr zu der Heizeinrichtung 20. Die elektrische Rückführung erfolgt über das Gehäuse 10. Die Anschluß- und Befestigungselemente 22, 24, 26 sind so gestaltet, daß kein Kunststoffmaterial über die Druchbrüche zu den elektrischen Anschlüssen gelangen kann.

Sehr vorteilhaft ist, daß die elektrischen Anschlüsse sich sämtlich an derselben Stirnseite befinden, an der das Materialrohr 12 den herausnehmbaren Stopfen 62 hat. Dadurch ist es möglich, das innenliegende Materialrohr 12 im eingebauten Zustand zu reinigen. Hierzu kann der Stopfen 62 nach Lösen einer Sicherungsschraube 64 axial abgezogen werden.

An die Baueinheit 70 können, wie in Fig. 4 schematisch gezeigt, weitere gleichartige Baueinheiten 70 angeschlossen werden. Das kann beispielsweise stirnseitig geschehen, wenn der - in diesem Fall entnehmbare - Verschluß 18 durch das entsprechend gestaltete Einführungsteil der weiteren Baueinheit 70 ersetzt wird. Eine andere Möglichkeit ist in Fig. 4 dargestellt. In diesem Ausführungsbeispiel schließt an den einen Materialaustritt 16, also rechtwinklig zum Hauptverteilerrohr, eine solche Quer-Baueinheit 70 mit stirnseitigem Materialeintritt an. Der umgebende Freiraum 58 zum Gehäuse 10 hin ist im Betrieb mit Kunststoff gefüllt, der an den Außenwänden erstarrt und somit den Übergang gleichzeitig abdichtet.

**Patentansprüche**

1.  Verteiler für Spritzguß-Heißkanalsysteme, mit einem Gehäuse (10) und wenigstens einem das zu verarbeitende Material (M) führenden Rohr (12), das am Umfang und/oder stirnseitig Materialübertritte (Ein- und Austrittsöffnungen 14; 16) aufweist und von einer als Widerstandsrohr oder -wendel ausgebildeten, dem Rohr (12) gegenüber elektrisch isolierten Heizeinrichtung (20) umschlossen ist, dadurch **gekennzeichnet,** daß das Materialrohr (12) zusammen mit der Heizeinrichtung (20) und einer diese umschließenden Hülse (50) eine selbständige, gegenüber dem Gehäuse (10) thermisch getrennte Baueinheit bildet, die stirnseitig in das Gehäuse (10) einführbar und darin bzw. daran fixierbar ist.

2.  Verteiler nach Anspruch 1, dadurch **gekennzeichnet,** daß die Heizeinrichtung (20) zumindest im Bereich der Materialübertritte (14, 16) von der Hülse (50) konzentrisch und elektrisch isoliert umgeben ist, welche ihrerseits zumindest zwischen den Materialübertritten (14, 16) von Stützringen (56) umschlossen ist.

3.  Verteiler nach Anspruch 1 oder 2, dadurch **gekennzeichnet,** daß die Heizeinrichtung (20) im wesentlichen in ganzer Länge von der Hülse (50) oder von Hülsenteilen satt anliegend umschlossen ist und daß an den Materialübertritten (14, 16) in der Hülse (50) Rohraussparungen (52) vorgesehen sind.

4.  Verteiler nach einem der Ansprüche 1 bis 3, dadurch **gekennzeichnet,** daß an einem Ende des Materialrohres (12) die elektrischen Anschlüsse (22, 32) für die Heizeinrichtung (20) angeordnet sind und daß sich im Bereich der Anschlüsse zusätzliche thermische und/oder elektrische Isolationen (26, 30) befinden.

5.  Verteiler nach einem der Ansprüche 1 bis 4, dadurch **gekennzeichnet,** daß das Materialrohr (12) an einem Ende einen Flansch (34) mit Durchlässen für elektrische Verbindungen der Heizeinrichtung (20) aufweist und daß die Hülse (50) einen Bund (72) hat, der an dem Flansch (34) formschlüssig anliegt, welcher an dem Gehäuse (10) in Rohr-Längsrichtung (L) festlegbar ist.

6.  Verteiler nach wenigstens einem der Ansprüche 1 bis 5, dadurch **gekennzeichnet,** daß die Heizeinrichtung (20) im Bereich der Materialübertritte (14, 16) Abschnitte konzentrierter Heizleistung (66) aufweist, an die zwischen den Materialübertritten Abschnitte verringerter Heizleistung (40) anschließen.

7.  Verteiler nach Anspruch 6, dadurch **gekennzeichnet,** daß die Heizeinrichtung (20) eine Wicklung oder Wendel mit ungleichförmiger Windungsdichte ist.

8.  Verteiler nach Anspruch 6, dadurch **gekennzeichnet,** daß die Heizeinrichtung (20) ein Widerstandsband mit breitflächigen Ringabschnitten (40) ist, an die mit geringem Abstand U-förmig ausgesparte Abschnitte (66) anschließen, welche in Umfangsrichtung beiderseits jedes Materialübertritts (14, 16) verlaufen.

9.  Verteiler nach Anspruch 6 oder 8, dadurch **gekennzeichnet,** daß die Heizeinrichtung (20) von einem flachen Band gebildet ist, das - zur Ebene abgewickelt - allgemein Mäanderform hat, wobei jeder zweite Längssteg (42) mit einem breitflächigen Abschnitt (40) versehen ist, der im wesentlichen den ganzen Umfang des Materialrohres (12) überdeckt.

10. Verteiler nach Anspruch 8 oder 9, dadurch **gekennzeichnet,** daß die breitflächigen Abschnitte (40) von dem Verbindungsschenkel (44) zum benachbarten Längssteg (42) jeweils durch einen schräg oder quer zur Rohr-Längsrichtung (L) verlaufenden Stichspalt (46) getrennt sind.

11. Verteiler nach einem der Ansprüche 6 bis 10, dadurch **gekennzeichnet**, daß innerhalb der Hülse (50), insbesondere in ausgesparten Abschnitten (66) der Heizeinrichtung (20), mit dieser gleichstarke; jedoch kleinflächigere Füllstücke (48) vorhanden sind.

12. Verteiler nach wenigstens einem der Ansprüche 1 bis 11, dadurch **gekennzeichnet,** daß die Baueinheit einen Zwei- oder Mehrschalenaufbau besitzt, wobei die Heizeinrichtung (20) zwischen dem materialführenden Rohr (12) und den Hülsen (50) angeordnet ist, und daß zumindest im Bereich zwischen den Materialübertritten (14, 16) eine zweistufige Isolierung zum Gehäuse (10) hin vorhanden ist.

13. Verteiler nach wenigstens einem der Ansprüche 1 bis 12, **gekennzeichnet** durch Radialabstände der Stützringe (56) derart, daß zur Heizeinrichtung (20) hin Hülsen-Luftspalte (54) und zum Gehäuse (10) hin Isolierräume (58) vorhanden sind, wobei letztere den Bereich zwischen den Materialübertritten (14, 16) überdecken.

14. Verteiler nach wenigstens einem der Ansprüche 1 bis 13, dadurch **gekennzeichnet,** daß das Materialrohr (12) namentlich am anschlußseitigen Ende einen herausziehbaren Stopfen (62) hat, der zumindest an seinem inneren Ende schwach konisch gestaltet ist.

15. Verteiler nach Anspruch 14, dadurch **gekennzeichnet,** daß der Stopfen (62) durch eine Sicherung (64) gehalten ist, beispielsweise eine Innensechskantschraube.

16. Verteiler nach wenigstens einem der Ansprüche 4 bis 15, dadurch **gekennzeichnet,** daß das Materialrohr (12) an der den elektrischen Anschlüssen (22, 32) gegenüberliegenden Stirnseite einen gegebenenfalls entnehmbaren Verschluß (18) aufweist.

17. Verteiler wenigstens nach Anspruch 16, dadurch **gekennzeichnet,** daß anstelle des Verschlusses (18) und/oder in einen Materialaustritt (16) eine weitere Materialrohr-Baueinheit (70) einsetzbar ist.

18. Verteiler nach wenigstens einem der Ansprüche 1 bis 17, dadurch **gekennzeichnet,** daß seine maschinenseitigen Flächen (60) zum Formschluß mit den zugeordneten Maschinenplatten ausgebildet sind oder der Verteiler mit seinem Gehäuse (10) eine Platte bildet.

## Claims

1. Manifold for hot runner system injection moulding, comprising a casing (10) and at least one tube (12) for carrying the material flow (M) to be processed, the tube having at its periphery and/or at its faces transition points (flow inlet 14; flow outlets 16) and being enclosed by a heating means (20) which is designed as a resistive tube or heater helix and is electrically insulated relative to the tube (12), wherein the flow tube (12) forms, together with the heating means (20) and a sleeve (50) encompassing the latter, an independent unit thermally separated from the casing (10) and adapted to be inserted at a face of the casing (10) and to be attached therein or thereat.

2. Manifold according to claim 1, wherein at least in the zone of the transition points (14, 16), the heating means (20) is encompassed concentrically and under electrical insulation by the sleeve (50) which itself is encompassed, at least between the transition points (14, 16), by ring supports (56).

3. Manifold according to claim 1 or claim 2, wherein the heating means (20) is tightly enclosed substantially over its entire length by the sleeve (50) or by portions thereof and wherein tube recesses (52) are provided in the sleeve (50) at the transition points (14, 16).

4. Manifold according to any one of claims 1 to 3, wherein electrical connections (22, 32) to the heating means (20) are arranged at one end of the flow tube (20) and wherein additional thermal and/or electrical insulations means (26, 30) are provided in the zone of these connections.

5. Manifold according to any one of claims 1 to 4, wherein one end of the flow tube (12) comprises a flange (34) having passages for electrical connections to the heating means (20) and wherein the sleeve (50) has a collar (72) positively fitted to the flange (34) which is fixable to the casing (10) in the longitudinal direction (L) of the tube.

6. Manifold according to at least one of claims 1 to 5, wherein the heating means (20) includes in the zone of the transition points (14, 16) portions (66) of concentrated heating power which are joined by portions (40) of reduced heating power between the transition points.

7. Manifold according to claim 6, wherein the heating means (20) is a coil or helix of non-uniform winding pitch.

8. Manifold according to claim 6, wherein the heating means (20) is a resistive heater band having broad-faced ring portions (40) joined at close distance by U-shaped recess portions (66) extending in a peripheral direction (U) on either side of each transition point (14, 16).

9. Manifold according to claim 6 or claim 8, wherein the heating means (20) is formed by a flat band which, as laid out to a plane, is of general meander shape, every other longitudinal link (42) being provided with a broad-faced portion (40) that extends over substantially the whole circumference of the flow tube (12).

10. Manifold according to claim 8 or claim 9, wherein the broad-faced portions (40) are each separated from a connecting leg (44) to the adjacent longitudinal link (42) by a needle gap (46) extending at an angle or transversal to the longitudinal direction (L) of the tube.

11. Manifold according to any one of claims 6 to 10, wherein within the sleeve (50), particularly in recessed portions (66) of the heating means (20), filling pieces (48) of equal thickness but smaller area than thereat are arranged.

12. Manifold according to at least one of claims 1 to 11, wherein the unit has a structure of two or more shells, with the heating means (20) being between the tube (12) carrying the material flow and the sleeves (50), and wherein at least in the zone between the transition points (14, 16), there is a two-stage insulation towards the casing (10).

13. Manifold according to at least one of claims 1 to 12, wherein the ring supports (56) are radially spaced in such manner that towards the heating means (20), there are air gaps (54) in the sleeve (50) and that towards the casing (10), there are insulating spaces (58) which latter extend over the zone between the transition points (14, 16).

14. Manifold according to at least one of claims 1 to 13, wherein the flow tube (12) has, especially at its terminal-sided end, a withdrawable plug (62) that is slightly conical at least at its inner end.

15. Manifold according to claim 14, wherein the plug (62) is retained by a locking means (64), e.g. a hexagon socket screw.

16. Manifold according to at least one of claims 4 to 15, wherein the flow tube (12) includes, at the face side opposite to the electrical connections (22, 32), a possibly detachable abutting member (18).

17. Manifold at least according to claim 16, wherein a further flow tube unit (70) is insertable in place of the abutting member (18) and/or into a flow outlet (16).

18. Manifold according to at least one of claims 1 to 17, wherein its machine-side faces (60) are designed to form-fit associated machine plates or wherein the manifold forms a plate that is integral with its casing (10).

**Revendications**

1. Collecteur pour des systèmes à canaux chauds de moulage par injection, avec une cage (10), et avec, pour transporter le matériau à traiter (M), au moins un tuyau (12), qui a sur la circonférence et/ou sur le côté frontal des passages pour le matériau (ouvertures d'entrée et de sortie 14, 16) et qui est entouré d'un dispositif de chauffage (20) en forme de tuyau ou de boudin de résistance isolé électriquement par rapport au tuyau (12), **caractérisé** par le fait que le tuyau de matériau (12), ensemble avec le dispositif de chauffage (20) et un manchon (50) entourant ce dernier, forme une unité de construction indépendante, séparée thermiquement de la cage (10), et pouvant être introduite du côté frontal dans la cage (10), dans ou sur laquelle elle peut être fixée.

2. Collecteur conforme à la revendication 1, **caractérisé** par le fait que le dispositif de chauffage (20) est entouré concentriquement et isolé électriquement, au moins dans le secteur des passages de matériau (14, 16), d'un manchon (50), qui est lui-même entouré de bagues d'appui (56), au moins entre les passages du matériau (14, 16).

3. Collecteur conforme à la revendication 1 ou 2, **caractérisé** par le fait que le dispositif de chauffage (20) est essentiellement entouré bien étroitement sur toute la longueur par un manchon (50) ou par des parties de manchon, et que des évidements du tuyau (52) sont prévus dans le manchon (50) aux passages du matériau (14, 16).

4. Collecteur conforme à l'une des revendications 1 à 3, **caractérisé** par le fait que les raccords électriques (22, 32) pour le dispositif de chauffage (20) sont disposés à une extrémité du tuyau pour le matériau (12) et que des isolations (26, 30) thermiques et/ou électriques complémentaires se trouvent dans le secteur des raccords.

5. Collecteur conforme à l'une des revendications 1 à 4, **caractérisé** par le fait que le tuyau pour le matériau (12) a à une extrémité une bride (34) avec des passages pour des raccords électriques du dispositif de chauffage (20), et que le manchon (50) a un collier (72), qui est relié de forme à la bride (34), laquelle peut être déterminée sur la cage (10) en direction longitudinale (L) du tuyau.

6. Collecteur conforme à au moins une des revendications 1 à 5, **caractérisé** par le fait que le dispositif de chauffage (20) a dans le secteur des passages de matériau (14, 16) des sections de puissance de chauffage concentrée (66), qui sont suivies entre les passages de matériau de sections d'une puissance de chauffage réduite (40).

7. Collecteur conforme à la revendication 6, **caractérisé** par le fait que le dispositif de chauffage (20) est un bobinage ou un boudin avec une densité de spires irrégulière.

8. Collecteur conforme à la revendication 6, **caractérisé** par le fait que le dispositif de chauffage (20) est un ruban de résistance avec des sections de bague (40) à surface large, qui sont suivies à courte distance de sections évidées en forme de U (66), lesquelles suivent un tracé circonférentiel de part et d'autre de chaque passage de matériau (14, 16).

9. Collecteur conforme à la revendication 6 ou 8, **caractérisé** par le fait que le dispositif de chauffage (20) est formé par une bande plate, laquelle - déroulée vers le plan - a généralement une forme de méandre, et où chaque deuxième traverse longitudinale (42) est pourvue d'une section à surface large (40) recouvrant essentiellement toute la circonférence du tuyau pour le matériau (12).

10. Collecteur conforme à la revendication 8 ou 9, **caractérisé** par le fait que du montant de raccordement (44) à la traverse longitudinale voisine (42), les sections à surface large (40) sont séparées respectivement par une fente (46) de direction oblique ou transversale par rapport à la direction longitudinale (L) du tuyau.

11. Collecteur conforme à l'une des revendications 6 à 10, **caractérisé** par le fait qu'il y a à l'intérieur du manchon (50), notamment dans des sections évidées (66) du dispositif de chauffage (20), des pièces intercalaires (48) de même épaisseur que celui-ci, mais de surface plus petite.

12. Collecteur conforme à au moins une des revendications 1 à 11, **caractérisé** par le fait que l'unité de construction a une construction en deux ou plusieurs coques, où le dispositif de chauffage (20) est situé entre le tuyau transportant le matériau (12) et les manchons (50) et qu'il y a au moins dans le secteur entre les passages du matériau (14, 16) une isolation à deux degrés envers la cage (10).

13. Collecteur conforme à au moins une des revendications 1 à 12, **caractérisé** par de telles distances radiales des bagues d'appui (56), qu'il y a vers le dispositif de chauffage (20) des fentes d'air du manchon (54), et vers la cage (10) des espaces isolants (58), ces derniers recouvrant le secteur entre les passages du matériau (14, 16).

14. Collecteur conforme à au moins une des revendications 1 à 13, **caractérisé** par le fait que le tuyau du matériau (12) a notamment a son extrémité du côté des raccords un bouchon amovible (62), qui a au moins à son extrémité intérieure une forme légèrement conique.

15. Collecteur conforme à la revendication 14, **caractérisé** par le fait que le bouchon (62) est retenu par un dispositif de sécurité (64), par exemple un boulon à six pans creux.

16. Collecteur conforme à au moins une des revendications 4 à 15, **caractérisé** par le fait que le tuyau de matériau (12) a une fermeture éventuellement amovible (18) sur le côté frontal opposé aux raccords électriques (22, 32).

17. Collecteur conforme au moins à la revendication 16, **caractérisé** par le fait qu'une autre unité de construction d'un tuyau de matériau (70) peut être montée à la place de la fermeture (18) et/ou dans une sortie du matériau (16).

18. Collecteur conforme à au moins une des revendications 1 à 17, **caractérisé** par le fait que ses surfaces du côté machine (60) sont formées pour être reliées de forme aux plaques correspondantes de la machine, ou que le collecteur forme une plaque avec sa cage (10).

FIG. 1

EP 0 274 005 B1

**Fig.2**

**Fig.3**

**Fig. 4**